# EUROPÄISCHE PATENTANMELDUNG

(11) **EP 4 596 200 A1**
(43) Veröffentlichungstag der Anmeldung: **06.08.2025**
(21) Anmeldenummer: 24155531.7
(22) Anmeldetag: 02.02.2024
(51) Int. Cl.: B27L 1/06, A01G 23/095

(54) **ENTASTUNGSVORRICHTUNG**

(71) Anmelder: Schönborn, Damian, 2013 Göllersdorf (AT)
(72) Erfinder: Schönborn, Damian, 2013 Göllersdorf (AT)
(74) Vertreter: SONN Patentanwälte GmbH & Co KG

(57) **Zusammenfassung**

Entastungsvorrichtung (1) zum Entasten eines Baumes (B) in einer Vorschubrichtung (V), mit einem für die Aufnahme eines Abschnitts eines Baumstamms (S) vorgesehenen Aufnahmeraum (2) und einer zur Anordnung um den Baumstamm (S) vorgesehenen Sägevorrichtung (3), welche mehrere drehbar gelagerte und mit zumindest einer Säge-Antriebseinheit (4) verbundene Sägekörper (5) aufweist, welche Sägekörper (5) um den Aufnahmeraum (2) herum angeordnet sind, wobei in Bezug auf die Vorschubrichtung (V) hinter der Sägevorrichtung (3) eine zur Anordnung um den Baumstamm (S) vorgesehene Fräsvorrichtung (6) vorgesehen ist, welche mehrere drehbar gelagerte und mit zumindest einer Fräs-Antriebseinheit (7) verbundene Fräskörper (8) aufweist, welche Fräskörper (8) um den Aufnahmeraum (2) herum angeordnet sind.

## Beschreibung

Die Erfindung betrifft eine Entastungsvorrichtung zum Entasten eines Baumes in einer Vorschubrichtung, mit einem für die Aufnahme eines Abschnitts eines Baumstamms vorgesehenen Aufnahmeraum und einer zur Anordnung um den Baumstamm vorgesehenen Sägevorrichtung, welche mehrere drehbar gelagerte und mit zumindest einer Säge-Antriebseinheit verbundene Sägekörper aufweist, welche Sägekörper um den Aufnahmeraum herum angeordnet sind.

Vorrichtungen zum maschinellen Entasten eines Baums, welche sich entlang eines stehenden Baumstamms bewegen oder bewegt werden, sind bekannt.

Die US 8,517,066 B1 offenbart eine selbst-kletternde Vorrichtung zum Entasten eines Baums, mit einem drehbaren und mehrere Schneidwerkzeuge aufweisenden Schneidteil. Das Schneidwerkzeug kann an einem Schwenkarm montiert sein, der mit Hilfe eines Aktuators in Richtung des Baums bewegt werden kann. Der Aktuator kann fluidbetrieben, beispielsweise ein hydraulischer oder pneumatischer Zylinder sein. Das Schneidwerkzeug kann ein rotierendes Sägeblatt oder eine Kettensäge sein. Zum Entasten eines Baums wird der Schneidteil wendelförmig entlang des Baumstamms bewegt.

Nachteilig an den bekannten Entastungsvorrichtungen ist, dass diese wegen des wendelförmigen Umlaufs um den Baumstamm eine geringe Vorschubgeschwindigkeit aufweisen und daher der Entastungsvorgang mit hohem Zeitaufwand und geringer Wirtschaftlichkeit verbunden ist. Mit Entastungsvorrichtungen welche einzelne Schneidwerkzeuge aufweisen und geradlinig entlang eines Baumstamms bewegt werden können hingegen Aststummel verbleiben.

Es ist nun Aufgabe der Erfindung eine Entastungsvorrichtung wie eingangs angegeben zu schaffen, welche die Nachteile des Standes der Technik vermeidet oder zumindest verringert. Insbesondere soll die Entastungsvorrichtung zur möglichst effizienten und zuverlässigen maschinellen Entastung von Bäumen mit unterschiedlichen Stammdurchmessern geeignet sein. Insbesondere sollen keine Aststummel am Baumstamm verbleiben und dennoch die Baumrinde während der Entastung nicht verletzt werden. Weiters soll die Entastungsvorrichtung auf einfache Weise am Stamm eines Baums befestigt werden können und rasch, vorzugsweise ohne weiteren manuellen Eingriff durch eine Bedienperson, und in einem einzigen Durchlauf entlang des Baumstamms, auch dicke und zahlreiche nebeneinander vom Baumstamm abstehende Äste entfernen können.

Diese Aufgabe wird durch eine Entastungsvorrichtung gemäß Anspruch 1 gelöst. Vorteilhafte Ausführungen und Weiterbildungen sind in den abhängigen Ansprüchen angegeben.

Die Erfindung ist dadurch gekennzeichnet, dass in Bezug auf die Vorschubrichtung hinter der Sägevorrichtung eine zur Anordnung um den Baumstamm vorgesehene Fräsvorrichtung vorgesehen ist, welche mehrere drehbar gelagerte und mit zumindest einer Fräs-Antriebseinheit verbundene Fräskörper aufweist, welche Fräskörper um den Aufnahmeraum herum angeordnet sind. Die Entastungsvorrichtung dient somit dem Entasten eines Baumes in einer Vorschubrichtung, d.h. die Entastungsvorrichtung wird während eines Entastungsvorgangs in Vorschubrichtung den Baumstamm entlang geführt. Die Vorschubrichtung ist insbesondere eine von den Wurzeln zur Baumspitze hin orientierte und dem Stammverlauf folgende Längsrichtung des Baumstamms. Die Entastungsvorrichtung weist einen für die Aufnahme eines Abschnitts eines Baumstamms vorgesehenen Aufnahmeraum auf. Somit ist zumindest ein Teil der Entastungsvorrichtung im Betriebszustand um den Baumstamm herum anordenbar. Der Aufnahmeraum kann bevorzugt im Wesentlichen zylindrisch oder kegelstumpfförmig ausgebildet sein. Die Entastungsvorrichtung weist zudem eine zur Anordnung um den Baumstamm vorgesehene Sägevorrichtung auf. Die um den Baumstamm anordenbare Sägevorrichtung ist ausgebildet, während des Vorschubs der Entastungsvorrichtung entlang des Baumstamms die sich im Schnittbereich der Sägevorrichtung befindenden Äste abzusägen. Hierfür weist die Sägevorrichtung mehrere drehbar gelagerte und mit zumindest einer Säge-Antriebseinheit verbundene Sägekörper auf, welche während des Vorschubs der Entastungsvorrichtung entlang des Baumstamms in die Äste eingreifen. Die Sägekörper können in einem Betriebszustand der Entastungsvorrichtung über eine gemeinsame Säge-Antriebseinheit angetrieben werden oder es kann zumindest ein Sägekörper oder alle Sägekörper einzeln über eine jeweils eigene Säge-Antriebseinheit angetrieben werden. Um die Äste zuverlässig vom im Aufnahmeraum aufgenommenen Teil des Baumstamms abtrennen zu können, sind die Sägekörper um den Aufnahmeraum herum angeordnet. Insbesondere können die Sägekörper gleichmäßig in Umfangsrichtung um den Baumstamm bzw. um den Aufnahmeraum herum angeordnet sein. Bevorzugt weist die Sägevorrichtung zumindest drei, besonders bevorzugt vier Sägekörper auf. Da die Sägekörper im Allgemeinen in einer ebenen Fläche verlaufen, der Baumstamm jedoch einen ungefähr runden Umfang aufweist, können nach dem Sägevorgang Aststummel am Baumstamm verbleiben, welche für eine Weiterverarbeitung des Baumstamms ebenfalls entfernt werden sollen. Hierfür ist in Bezug auf die Vorschubrichtung hinter der Sägevorrichtung eine zur Anordnung um den Baumstamm vorgesehene Fräsvorrichtung vorgesehen. Die um den Baumstamm anordenbare Fräsvorrichtung ist ausgebildet während des Vorschubs der Entastungsvorrichtung entlang des Baumstamms die während des Sägevorgangs am Baumstamm verbliebenen Aststummel abzufräsen. Hierfür weist die Fräsvorrichtung mehrere drehbar gelagerte und mit zumindest einer Fräs-Antriebseinheit verbundene Fräskörper auf, welche während des Vorschubs der Entastungsvorrichtung entlang des Baumstamms in die Aststummel eingreifen. Die Fräskörper können in einem Betriebszustand der Entastungsvorrichtung über eine gemeinsame Fräs-Antriebseinheit angetrieben werden oder es kann zumindest ein Fräskörper oder alle Fräskörper einzeln über eine jeweils eigene Fräs-Antriebseinheit angetrieben werden. Insbesondere kann die Fräs-Antriebseinheit zugleich die Säge-Antriebseinheit sein. Um die Aststummel zuverlässig vom im Aufnahmeraum aufgenommenen Baumstamm abfräsen zu können, sind die Fräskörper um den Aufnahmeraum herum angeordnet. Insbesondere können die Fräskörper gleichmäßig in Umfangsrichtung um den Baumstamm bzw. um den Aufnahmeraum herum angeordnet sein. Bevorzugt weist die Fräsvorrichtung zumindest drei, besonders bevorzugt vier Fräskörper auf. Die Anzahl der Fräskörper kann größer oder kleiner, bevorzugt aber gleich der Anzahl der Sägekörper sein.

Die Entastungsvorrichtung ist somit ausgebildet, während ihrer Bewegung entlang eines Baumstamms die Äste, insbesondere alle Äste, mit der Sägevorrichtung vom Baumstamm abzusägen und mit der hinter der Sägevorrichtung angeordneten Fräsvorrichtung die nach dem Sägevorgang verbliebenen Aststummel vom Baumstamm abzufräsen.

Wenn im Verlauf der Beschreibung auf Orts- und Richtungsangaben wie "oben", "unten, "vorne", "hinten" oder "seitlich" Bezug genommen wird, so beziehen sich diese Angaben auf einen bestimmungsgemäßen Verwendungszustand der Entastungsvorrichtung, in welchem diese einen Baumstamm umgibt. Der Begriff "vertikal" bedeutet in Richtung der Schwerkraft, von "oben" nach "unten", oder umgekehrt. Wenn die Entastungsvorrichtung in einer abweichenden Lage verwendet werden soll, sind die Orts- und Richtungsangaben entsprechend zu übertragen.

Die Längsrichtung oder die Längserstreckung und die Dicke des Baumstamms können sich selbstverständlich abhängig vom Abstand über dem Erdboden, in welchem der Baum verwurzelt ist, ändern. Die Angaben Längsrichtung, Längserstreckung und Dicke des Baumstamms sind somit in der vorliegenden Beschreibung im Allgemeinen an jenen veränderlichen Positionen am Baumstamm zu betrachten, an welchen die Entastungsvorrichtung zu dem Betrachtungszeitpunkt angeordnet ist.

Gemäß einer bevorzugten Ausführungsform der Erfindung sind die Sägevorrichtung und die Fräsvorrichtung an einem bevorzugt öffenbaren Rahmen montiert, welcher insbesondere ausgebildet ist, zumindest die Hälfte des Umfangs des Baumstamms zu umgreifen. Somit können die Sägevorrichtung und die Fräsvorrichtung, wenn der Rahmen geöffnet ist, auf einfache Weise um den Baumstamm angeordnet werden, woraufhin der Rahmen geschlossen wird. Wenn der Rahmen im geschlossenen Zustand zumindest die Hälfte des Umfangs des Baumstamms umgreift, ist der Rahmen zuverlässig am Baumstamm angeordnet, ohne seitlich abzurutschen. Der Rahmen kann elastisch ausgebildet und in seiner Ruheposition geschlossen sein, wobei der Rahmen zur Anordnung um den Baumstamm aufgeweitet wird. Besonders bevorzugt weist der Rahmen jedoch ein Gelenk zum Öffnen des Rahmens auf. Zudem kann am Rahmen ein Verschluss vorgesehen sein, mit welchem der Rahmen zuverlässig verschlossen werden kann. Der Rahmen kann auf verschiedene Weise ausgebildet sein, bspw. als Ring, Vieleck, Zylinder oder allgemein rohrförmig mit rundem oder eckigem Querschnitt.

Wenn die Fräskörper in Bezug auf die Sägekörper in einer Umfangsrichtung des Aufnahmeraums versetzt angeordnet sind und insbesondere die Fräskörper in der Umfangsrichtung des Aufnahmeraums mittig oder gleichmäßig verteilt zwischen benachbarten Sägekörpern angeordnet sind, können die Aststummel besonders effizient entfernt werden. Die Aststummel werden im Bereich der Drehachse der im allgemeinen ebenen Sägekörper nur geringe Erstreckung vom Baumstamm aufweisen, jedoch mit zunehmendem Abstand von der Drehachse länger werden. Durch die in Umfangsrichtung versetzte Anordnung der Fräskörper in Bezug auf die Sägekörper können die Fräskörper die verbliebenen längeren Aststummel möglichst vollständig abfräsen. Im Fall eines einzigen Fräskörpers zwischen jeweils zwei benachbarten Sägekörpern ist der Fräskörper bevorzugt in der Mitte zwischen den Sägekörpern angeordnet. Wenn mehrere Fräskörper zwischen jeweils zwei benachbarten Sägekörpern vorgesehen sind, sind die mehreren Fräskörper bevorzugt in gleichen Winkelabständen zueinander zwischen den Sägekörpern angeordnet.

Wenn zumindest zwei Sägekörper in Vorschubrichtung in Bezug aufeinander höhenversetzt angeordnet sind und/oder zumindest zwei Fräskörper in Vorschubrichtung in Bezug aufeinander höhenversetzt angeordnet sind, kann eine Kollision der in Bezug aufeinander höhenversetzten Sägekörper und/oder Fräskörper vermieden werden, selbst wenn diese vergleichsweise große Abmessungen aufweisen, beispielsweise einen Durchmesser oder eine Längserstreckung zumindest im Ausmaß des Durchmessers des Baumstamms. Bevorzugt sind daher benachbarte Sägekörper und/oder benachbarte Fräskörper in Bezug aufeinander in Vorschubrichtung höhenversetzt angeordnet.

Besonders vorteilhaft ist es, wenn sich die in Bezug aufeinander höhenversetzten Sägekörper in einer Ansicht in Vorschubrichtung kreuzen, um eine durchgehende Schnittlinie zu bilden und/oder sich die in Bezug aufeinander höhenversetzten Fräskörper in einer Ansicht in Vorschubrichtung kreuzen, um eine durchgehende Fräsfläche zu bilden. Die in Umfangsrichtung teilweise oder vollständig durchgehende Schnittlinie und/oder Fräsfläche gewährleistet eine vollständige Entfernung der Äste und/oder Aststummel vom Baumstamm im Bereich der durchgehenden Schnittlinie und/oder Fräsfläche.

Um einen zweckmäßigen Abstand der Sägekörper und/oder Fräskörper vom Baumstamm gewährleisten zu können, in welchem die Äste und/ oder Aststummel möglichst nahe am Baumstamm entfernt werden, ohne die Baumrinde zu verletzen, können die Sägekörper und/oder die Fräskörper zum Aufnahmeraum hin und vom Aufnahmeraum weg verstellbar angeordnet sein. Hierdurch kann ein geeigneter Abstand zum Baumstamm auch bei variierender Dicke eines Baustamms oder allgemein für Bäume unterschiedlicher Dicke eingestellt werden.

Beispielsweise können die zum Aufnahmeraum hin und vom Aufnahmeraum weg verstellbar angeordneten Sägekörper und/oder Fräskörper mit zumindest einem zum Aufnahmeraum hin und vom Aufnahmeraum weg verstellbar angeordneten Tastrad verbunden sein. Bevorzugt ist das Tastrad zum Aufnahmeraum hin, insbesondere in den Aufnahmeraum hinein, vorgespannt. Zweckmäßigerweise ist das Tastrad für eine Anlage am Baumstamm angeordnet, um die Außenkontur des Baumstamms abzutasten. Über gelenkig gelagerte Verbindungsstangen kann die Position des Tastrads, insbesondere einer Drehwelle des Tastrads, an die Sägekörper und/oder Fräskörper übertragen werden, um diese in einem zweckmäßigen Abstand zum Baumstamm zu positionieren. Günstiger Weise ist das Tastrad in Bezug auf die Vorschubrichtung hinter den Sägekörpern und Fräskörpern vorgesehen. Von Vorteil ist zudem, wenn jeder Sägekörper und jeder Fräskörper oder jedes Paar aus einem Sägekörper und einem Fräskörper mit einem eigenen Tastrad verbunden ist. Wenn zumindest zwei Tasträder in Bezug auf die Vorschubrichtung hintereinander angeordnet sind, kann ein iW. konischer Verlauf des Baumstamms in dessen Längsrichtung durch eine unterschiedliche Position der beiden Tasträder in Richtung zum Aufnahmeraum hin und vom Aufnahmeraum weg erfasst werden. Der erfasste konische Verlauf kann über eine weitere Verbindungsstange, welche mit den beiden Tasträdern und mit dem Sägekörper verbunden ist, an den Sägekörper übertragen werden, um diesen zu verschwenken, insbesondere in eine Position zu verschwenken, in welcher eine Hauptebene des Sägekörpers parallel zur Baumoberfläche ist.

Von besonderem Vorteil ist es, wenn zumindest ein Sägekörper an einem schwenkbar gelagerten Säge-Haltearm montiert ist und zumindest ein Fräskörper an einem schwenkbar gelagerten Fräs-Haltearm montiert ist. Somit kann die Position des zumindest einen Sägekörpers, bevorzugt aller Sägekörper, und die Position des zumindest eines Fräskörpers, bevorzugt aller Fräskörper, in Bezug auf den Aufnahmeraum und somit der Abstand zum im Aufnahmeraum aufgenommenen Teil des Baumstamms verändert werden. Insbesondere können der Säge-Haltearm und der Fräs-Haltearm zum Aufnahmeraum hin und vom Aufnahmeraum weg verschwenkbar ausgebildet sein. Hierfür können der Säge-Haltearm und der Fräs-Haltearm an einem Gelenk montiert sein.

Für eine besonders flexible Positionierung des Sägekörpers und des Fräskörpers kann vorgesehen sein, dass der Säge-Haltearm schwenkbar mit dem Fräs-Haltearm verbunden ist und vorzugsweise eine den Säge-Haltearm und den Fräs-Haltearm verbindende Säge-Haltearm-Verstelleinrichtung, insbesondere ein Motor, besonders bevorzugt ein Servomotor, vorgesehen ist. Der Säge-Haltearm kann über ein Gelenk schwenkbar mit dem Fräs-Haltearm verbunden sein. Mittels der Säge-Haltearm-Verstelleinrichtung kann die Position, insbesondere der Winkel, des Säge-Haltearms in Bezug auf den Fräs-Haltearm eingestellt und bis zur Durchführung der nächsten Positionsänderung beibehalten werden. Die Säge-Haltearm-Verstelleinrichtung kann pneumatisch, hydraulisch oder elektrisch betrieben werden und ist vorzugsweise ein Elektromotor, besonders bevorzugt ein Servomotor. Bekannter Weise ermöglichen Servomotoren eine Einstellung der Winkelposition und der Drehgeschwindigkeit ihrer Motorwelle.

Für eine besonders flexible Positionierung des Sägekörpers in Bezug auf den Säge-Haltearm kann vorgesehen sein, dass der am Säge-Haltearm montierte Sägekörper schwenkbar am Säge-Haltearm montiert ist und vorzugsweise eine den Sägekörper und den Säge-Haltearm verbindende Sägekörper-Verstelleinrichtung, insbesondere ein Motor, besonders bevorzugt ein Servomotor, vorgesehen ist. Der Sägekörper kann über ein Gelenk schwenkbar mit dem Säge-Haltearm verbunden sein. Mittels der Sägekörper-Verstelleinrichtung kann die Position, insbesondere der Winkel, des Sägekörpers in Bezug auf den Säge-Haltearm eingestellt und bis zur Durchführung der nächsten Positionsänderung beibehalten werden. Insbesondere kann der Sägekörper über das Gelenk und die Sägekörper-Verstelleinrichtung in einem festgelegten Winkel, insbesondere im Wesentlichen parallel, zur dem Sägekörper gegenüberliegenden Oberfläche des Baumstamms ausgerichtet werden. Die Sägekörper-Verstelleinrichtung kann pneumatisch, hydraulisch oder elektrisch betrieben werden und ist vorzugsweise ein Elektromotor.

Die Positionierung des Fräskörpers in Bezug auf den Aufnahmeraum kann noch weiter erleichtert werden, indem der Fräs-Haltearm schwenkbar am Rahmen montiert ist und vorzugsweise eine den Fräs-Haltearm und den Rahmen verbindende Fräs-Haltearm-Verstelleinrichtung, insbesondere ein Motor, besonders bevorzugt ein Servomotor, vorgesehen ist. Der Fräs-Haltearm kann über ein Gelenk schwenkbar mit dem Rahmen verbunden sein. Mittels der Fräs-Haltearm-Verstelleinrichtung kann die Position, insbesondere der Winkel, des Fräs-Haltearms in Bezug auf eine Hauptebene des Rahmens eingestellt und bis zur Durchführung der nächsten Positionsänderung beibehalten werden. Die Fräs-Haltearm-Verstelleinrichtung kann pneumatisch, hydraulisch oder elektrisch betrieben werden und ist vorzugsweise ein Elektromotor.

Bevorzugt kann eine Steuereinheit vorgesehen sein, welche ausgebildet ist einen vordefinierten Abstand, insbesondere einen vordefinierten Mindestabstand, der Sägekörper und/oder der Fräskörper zum Baumstamm einzustellen. Die Steuereinheit kann mit der Säge-Haltearm-Verstelleinrichtung und/oder der Sägekörper-Verstelleinrichtung und/oder der Fräs-Haltearm-Verstelleinrichtung verbunden sein. Die Steuereinheit kann einen Abstandsdetektor aufweisen oder damit verbunden sein, welcher zumindest den Abstand eines Sägekörpers oder eines Fräskörpers zum im Aufnahmeraum aufgenommenen Teil des Baumstamms misst. Abhängig vom zumindest einen gemessenen Abstand zum Baumstamm kann die Steuereinheit die Säge-Haltearm-Verstelleinrichtung und/oder die Sägekörper-Verstelleinrichtung und/oder die Fräs-Haltearm-Verstelleinrichtung zur Einhaltung des Abstands, insbesondere Mindestabstands, ansteuern. Die Einstellung des Abstands zum Baumstamm kann kontinuierlich erfolgen.

Eine besonders einfache und kostengünstige Ausführungsform kann vorsehen, dass die Sägekörper Kreissägenblätter oder Sägeketten sind. Die Sägeketten können umlaufend auf einem feststehenden Sägekettenträger oder feststehend auf einem selbst umlaufenden Sägekettenträger montiert sein. Wenn der Sägekettenträger eine Scheibe ist, auf welcher die Sägekette angeordnet ist, kann die Scheibe gemeinsam mit der Sägekette eine Schneidscheibe als Sägekörper bilden.

Es ist zudem von Vorteil, wenn die Fräskörper Fräswalzen, insbesondere mit einer nach innen zu einer Drehachse der Fräswalzen gewölbten Fräsfläche sind. Die Fräswalzen können robust und kostengünstig ausgebildet sein und an die jeweilige Baumart angepasst sein. Eine nach innen zu einer Drehachse der Fräswalze gewölbte Fräsfläche ermöglicht über die gesamte Fräsfläche betrachtet einen geringeren Abstand der Fräsfläche zur der Fräsfläche gegenüberliegenden Baumoberfläche und damit einen effizienteren Fräsvorgang.

Gemäß einer weiteren bevorzugten Ausführungsform kann eine mit der Sägevorrichtung und der Fräsvorrichtung verbundene, insbesondere am Rahmen montierte Klettereinrichtung zur Anordnung am Baumstamm vorgesehen sein. Die Klettereinrichtung dient der maschinellen Beförderung der um einen Baumstamm angeordneten Entastungsvorrichtung, den Baumstamm entlang, bevorzugt von unten nach oben. Zweckmäßigerweise ist die Klettereinrichtung unterhalb der Sägevorrichtung und unterhalb der Fräsvorrichtung, beispielsweise auch unterhalb des Rahmens angeordnet, um die darüber angeordneten Sägekörper und Fräskörper am Baumstamm nach oben zu schieben.

Besonders vorteilhaft ist es, wenn die Klettereinrichtung zumindest zwei drehbar gelagerte Drehkörper, vorzugsweise ein Rad oder eine Rolle, mit einer in Umfangsrichtung kreisförmigen Lauffläche und eine Kletter-Antriebseinheit aufweist, welche mit zumindest einem der Drehkörper verbunden ist, wobei die Drehkörper angeordnet sind, in einem am Baumstamm angeordneten Zustand der Klettereinrichtung den Baumstamm zwischen den Drehkörpern aufzunehmen und über die Laufflächen von zumindest zwei der Drehkörper am Baumstamm anzuliegen, wobei Drehachsen der Drehkörper in einem Winkel von 90 Grad zur Vorschubrichtung angeordnet sind, wobei vorzugsweise zumindest ein Drehkörper über ein Vorspannelement gegen den Baumstamm vorgespannt ist. Die Klettereinrichtung kann somit mittels der Drehkörper, insbesondere Räder oder Rollen, den Baumstamm entlang fahren, wofür zumindest ein Drehkörper mit der Kletter-Antriebseinheit verbunden ist. Die Kletter-Antriebseinheit kann einen Antriebsmotor bspw. einen Elektromotor, einen Hydraulikmotor, einen Pneumatikmotor oder einen Verbrennungsmotor aufweisen. Insbesondere können die Säge-Antriebseinheit, die Fräs-Antriebseinheit und die Kletter-Antriebseinheit gemeinsame Komponenten, bspw. einen gemeinsamen Antriebsmotor aufweisen. Zur Einstellung unterschiedlicher Drehzahlen der Säge-Antriebseinheit, der Fräs-Antriebseinheit und der Kletter-Antriebseinheit können Übersetzungseinrichtungen vorgesehen sein, welche auch mit dem gemeinsamen Antriebsmotor verbunden sein können. Um den Baumstamm entlang fahren zu können, sind die Drehkörper angeordnet, in einem am Baumstamm angeordneten Zustand der Klettereinrichtung den Baumstamm zwischen den Drehkörpern aufzunehmen und dadurch einzuklemmen, sodass zumindest zwei der Drehkörper über ihre Laufflächen direkt oder indirekt am Baumstamm anliegen. Wenn nur zwei Drehkörper vorgesehen sind, sind diese einander gegenüberliegend am Baumstamm angeordnet. Im Falle von zumindest drei in Umfangsrichtung des Baumstamms vorgesehenen Drehkörpern sind diese bevorzugt in gleichen Winkelabständen um den Baumstamm bzw. um den Aufnahmeraum herum angeordnet. Damit die Klettereinrichtung möglichst auf direktem Weg, d.h. der Längserstreckung des Baumstamms folgend und nicht wendelförmig den Baumstamm entlang fährt, sind die Drehachsen der Drehkörper bevorzugt in einem Winkel von 90 Grad zur Vorschubrichtung angeordnet. Um einen zuverlässigen Angriff der Drehkörper am Baumstamm zu gewährleisten, ist vorzugsweise zumindest ein Drehkörper über ein Vorspannelement gegen den Baumstamm, d.h. in Richtung des Aufnahmeraums vorgespannt. Das Vorspannelement kann bspw. eine Schraubenfeder sein. Die Klettereinrichtung kann auch Drehkörper in unterschiedlichen Höhen bspw. übereinander angeordnete Drehkörper aufweisen. Zudem kann die Klettereinrichtung eine Kette oder eine Raupe, bspw. aus Metall oder Kunststoff aufweisen, welche über die Drehkörper angetrieben wird und am Baumstamm anliegt. Insbesondere können zwei übereinander angeordnete Drehkörper über die Kette oder Raupe miteinander verbunden sein, wobei dann die Laufflächen der Drehkörper über diese Kette oder Raupe am Baumstamm anliegen.

Gemäß einer besonders einfachen Ausführungsform kann die Klettereinrichtung ohne die Kletter-Antriebseinheit ausgebildet sein, wobei dann die Entastungsvorrichtung, d.h. zumindest die Sägevorrichtung, die Fräsvorrichtung und bevorzugt auch die drehbar gelagerten Drehkörper, durch einen externen Teleskoparm oder einen Kranarm entlang des Baumstamms verschoben wird.

Wenn die Klettereinrichtung zwei Rollen mit einer nach innen zu einer Drehachse der Rollen gewölbten Lauffläche als Drehkörper aufweist, kann die Klettereinrichtung, auch wenn nur zwei Rollen vorgesehen sind, wirksam gegen ein seitliches Abrutschen vom Baumstamm geschützt werden.

Die Erfindung wird nachstehend anhand von bevorzugten Ausführungsbeispielen, auf welche sie jedoch nicht beschränkt sein soll, noch weiter erläutert. In den Zeichnungen zeigen:
Fig. 1 eine Entastungsvorrichtung gemäß der Erfindung mit einer Sägevorrichtung, einer Fräsvorrichtung und einer Klettereinrichtung, in einer perspektivischen Ansicht;
Fig. 2A eine symbolische Darstellung eines Baums mit zu entfernenden Ästen und von vier um den Baumstamm herum angeordneten Sägekörpern der Entastungsvorrichtung, in einer Querschnittansicht;
Fig. 2B den Baum aus Fig. 2A nach dem Absägen der Äste, mit nach dem Sägevorgang verbliebenen Aststummeln;
Fig. 2C eine symbolische Darstellung des Baums aus Fig. 2B mit den zu entfernenden Aststummeln und von vier um den Baumstamm herum angeordneten Fräskörpern der Entastungsvorrichtung, in einer Querschnittansicht;
Fig. 3 eine mit der Sägevorrichtung und der Fräsvorrichtung verbundene, am Rahmen montierte Klettereinrichtung mit Rollen;
Fig. 4 eine mit der Sägevorrichtung und der Fräsvorrichtung verbundene, am Rahmen montierte Klettereinrichtung mit Raupen;
Fig. 5 einen Drehkörper der Klettereinrichtung, wobei eine Drehachse des Drehkörpers in einem Winkel von 90 Grad zur Vorschubrichtung angeordnet ist;
Fig. 6 einen Teil einer mechanischen Steuervorrichtung zur Positionierung eines Sägekörpers und eines Fräskörpers in Bezug auf einen Baumstamm, in einer vereinfachten Darstellung;
Fig. 7A ein Beispiel eines Drehkörpers mit welliger Oberfläche; und
Fig. 7B ein anderes Beispiel eines Drehkörpers mit welliger Oberfläche.

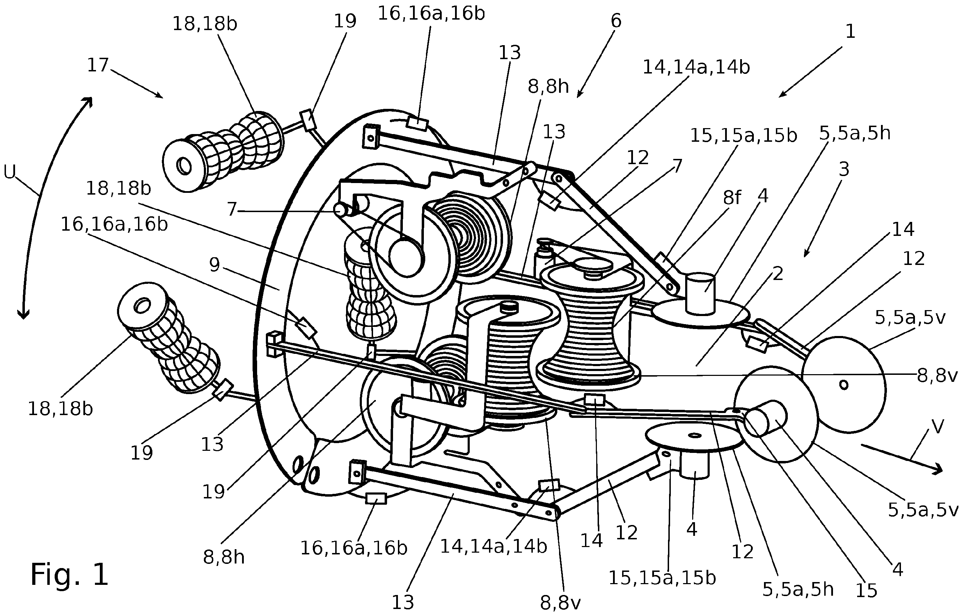

Es sei darauf hingewiesen, dass die Figuren 1 bis 7 nicht notwendigerweise maßstabsgetreu dargestellt sind.

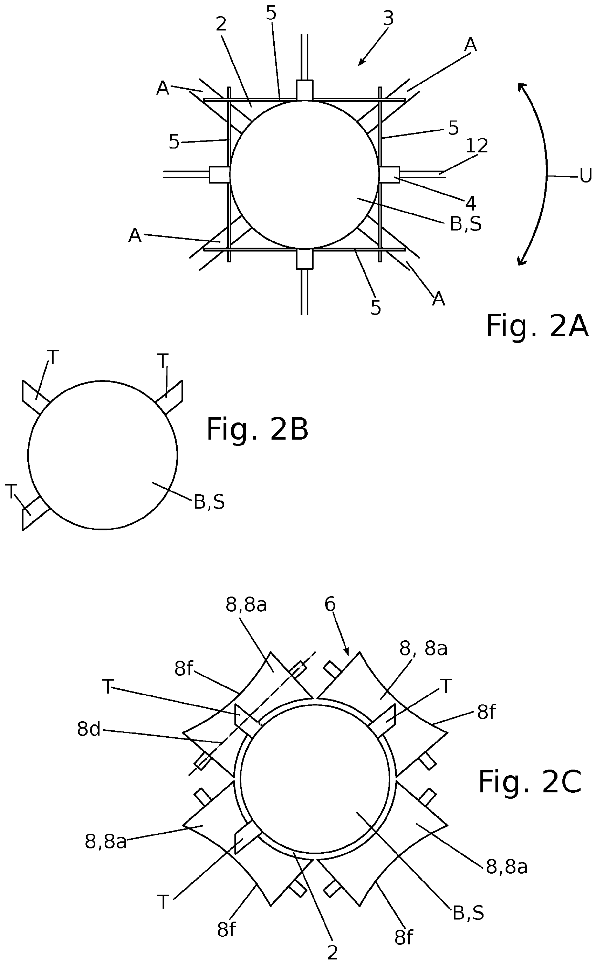

Fig. 1 zeigt symbolisch eine Entastungsvorrichtung 1 zum Entasten eines Baumes B in einer Vorschubrichtung V. Die Entastungsvorrichtung 1 weist einen für die Aufnahme eines Abschnitts eines Baumstamms S vorgesehenen Aufnahmeraum 2 und eine zur Anordnung um den Baumstamm S vorgesehene Sägevorrichtung 3 auf. Die Sägevorrichtung 3 weist mehrere drehbar gelagerte und mit zumindest einer Säge-Antriebseinheit 4 verbundene Sägekörper 5 auf. Die Sägekörper 5 sind um den Aufnahmeraum 2 herum angeordnet. Die Sägekörper sind als Kreissägenblätter 5a dargestellt, können aber ebenso Sägeketten 5b, insbesondere Schneidscheiben mit Sägeketten sein. In Bezug auf die Vorschubrichtung V hinter der Sägevorrichtung 3 ist eine zur Anordnung um den Baumstamm S vorgesehene Fräsvorrichtung 6 vorgesehen, welche mehrere drehbar gelagerte und mit zumindest einer Fräs-Antriebseinheit 7 verbundene Fräskörper 8 aufweist. Auch die Fräskörper 8 sind um den Aufnahmeraum 2 herum angeordnet. Die Fräskörper 8 sind als Fräswalzen 8a dargestellt, welche insbesondere eine nach innen zu einer Drehachse 8d der Fräswalzen 8a gewölbte Fräsfläche 8f aufweisen, siehe beispielsweise Fig. 2C.

Für eine stabile Konstruktion der Entastungsvorrichtung 1 sind im Beispiel gemäß Fig. 1 die Sägevorrichtung 3 und die Fräsvorrichtung 6 an einem bevorzugt öffenbaren und wieder verschließbaren Rahmen 9 montiert. Der Rahmen 9 kann hierfür ein in Fig. 1 nicht dargestelltes Gelenk aufweisen. Der Rahmen 9 ist insbesondere ausgebildet, zumindest die Hälfte des Umfangs des Baumstamms S zu umgreifen.

Im Beispiel gemäß Fig. 1 sind die einzelnen Fräskörper 8 in Bezug auf die einzelnen Sägekörper 5 in Vorschubrichtung V hintereinander angeordnet, d.h. seitlich in Umfangsrichtung U des Baumstamms S nicht zueinander versetzt. Somit gelangen die Mittelpunkte der Fräskörper 8 in Vorschubrichtung V zu jenen Stellen am Baumstamm S an welchen zuvor die Drehachsen der Sägekörper 5 vorhanden waren. Die Aststummel T können auf Grund der gebogenen Form der Fräskörper 8 dennoch zuverlässig vom Baumstamm S abgefräst werden.

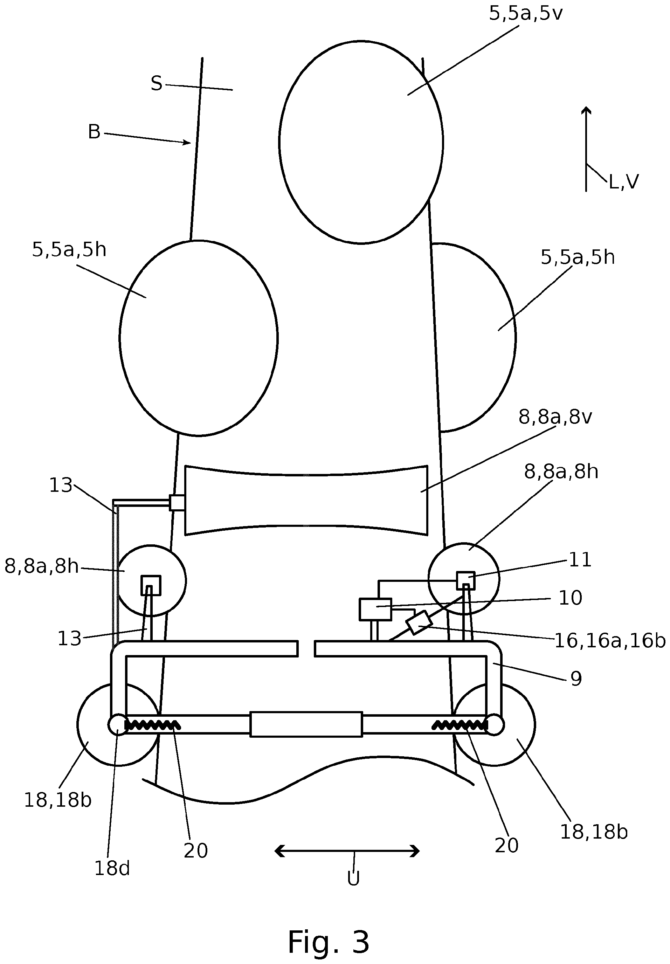

Im Beispiel gemäß Fig. 3 hingegen sind die Fräskörper 8 in Bezug auf die Sägekörper 5 in einer Umfangsrichtung U des Aufnahmeraums 2 versetzt angeordnet. Insbesondere sind die Fräskörper 8 in der Umfangsrichtung U des Aufnahmeraums 2 mittig zwischen benachbarten Sägekörpern 5 angeordnet. Wären mehrere Fräskörper 8 zwischen benachbarten Sägekörpern 5 vorgesehen, so wären die Fräskörper 8 bevorzugt gleichmäßig verteilt zwischen den benachbarten Sägekörpern 5 angeordnet. Die in Umfangsrichtung U versetzte Anordnung ermöglicht ein besonders sorgfältiges bzw. vollständiges Abfräsen der Aststummel T. In Fig. 3 wurden der Übersichtlichkeit wegen Haltearme für die Sägekörper 5 weggelassen.

In den Figuren 1 und 3 ist weiters erkennbar, dass zumindest zwei vordere Sägekörper 5v in Vorschubrichtung V in Bezug auf zwei hintere Sägekörper 5h höhenversetzt angeordnet sind. Zudem sind in diesem Beispiel zwei vordere Fräskörper 8v in Vorschubrichtung V in Bezug auf zwei hintere Fräskörper 8h höhenversetzt angeordnet. Die höhenversetzte Anordnung der Sägekörper 5v, 5h und/oder der Fräskörper 8v, 8h verhindert Kollisionen benachbarter Sägekörper 5 und/oder Fräskörper 8.

Die Figuren 2A bis 2C zeigen schematisch einzelne Schritte eines Entastungsvorgangs. In Fig. 2A ist ein Baumstamm S mit davon abstehenden Ästen A in einer Schnittansicht quer zu einer Längserstreckung L des Baumstamms S dargestellt. Die Äste A sollen entfernt werden. Hierfür ist ein Abschnitt des Baumstamms S im Aufnahmeraum 2 der Entastungsvorrichtung 1 aufgenommen und die Sägevorrichtung 3 ist um den Baumstamm S herum angeordnet (die Fräsvorrichtung 6 ist in Fig. 2A der Übersichtlichkeit wegen nicht dargestellt). Insbesondere sind die Sägekörper 5, im Beispiel gemäß Fig. 2A vier Sägekörper 5, um den Aufnahmeraum 2 herum angeordnet. Gemäß Fig. 2A ist der Durchmesser der Sägekörper 5 größer als der Durchmesser des Baumstamms S. Wenn benachbarte Sägekörper 5 höhenversetzt zueinander angeordnet sind, kann eine Kollision der Sägekörper 5 dennoch vermieden werden, auch wenn die Äste A möglichst knapp am Baumstamm S abgesägt werden. Beispielsweise sind die kürzesten nach dem Sägen verbleibenden Aststummel T höchstens 1 cm bis 5 cm lang. Zu erkennen ist zudem, dass sich die in Bezug aufeinander höhenversetzten Sägekörper 5 in einer Ansicht in Vorschubrichtung V kreuzen, um eine durchgehende Schnittlinie zu bilden.

In Fig. 2B wurden die Äste A bereits mit der Sägevorrichtung 3 vom Baumstamm S abgetrennt. Wegen der ebenen Ausbildung der Sägekörper 5 verbleiben dabei Aststummel T am Baumstamm S, welche mit der Fräsvorrichtung 6 abgefräst werden.

Fig. 2C zeigt die um den Baumstamm S herum angeordnete Fräsvorrichtung 6 in Bezug auf die Aststummel T (die Sägevorrichtung 3 ist in Fig. 2C der Übersichtlichkeit wegen nicht dargestellt). Insbesondere sind die Fräskörper 8, im Beispiel gemäß Fig. 2C vier Fräskörper 8, um den Aufnahmeraum 2 herum angeordnet. Die Fräskörper 8 fräsen die verbliebenen Aststummel T in einem Mindestabstand vom Baumstamm S ab. Der Mindestabstand der Fräskörper 8 vom Baumstamm S kann beispielsweise 2 mm bis 5 mm betragen, um die Baumrinde nicht zu verletzen. Zumindest wenn die Länge der Fräskörper 8 in Richtung von deren Drehachse 8d größer als der Durchmesser des Baumstamms S ist, sind bevorzugt benachbarte Fräskörper 8 höhenversetzt zueinander angeordnet. Hierdurch kann eine Kollision der Fräskörper 8 vermieden werden, auch wenn die Aststummel T möglichst knapp am Baumstamm S, insbesondere im Mindestabstand abgefräst werden. Die in Bezug aufeinander höhenversetzten Fräskörper 8 können sich in einer Ansicht in Vorschubrichtung V kreuzen, um eine durchgehende Fräsfläche zu bilden. In Fig. 2C sind der Übersichtlichkeit wegen einander nicht kreuzende Fräskörper 8 dargestellt.

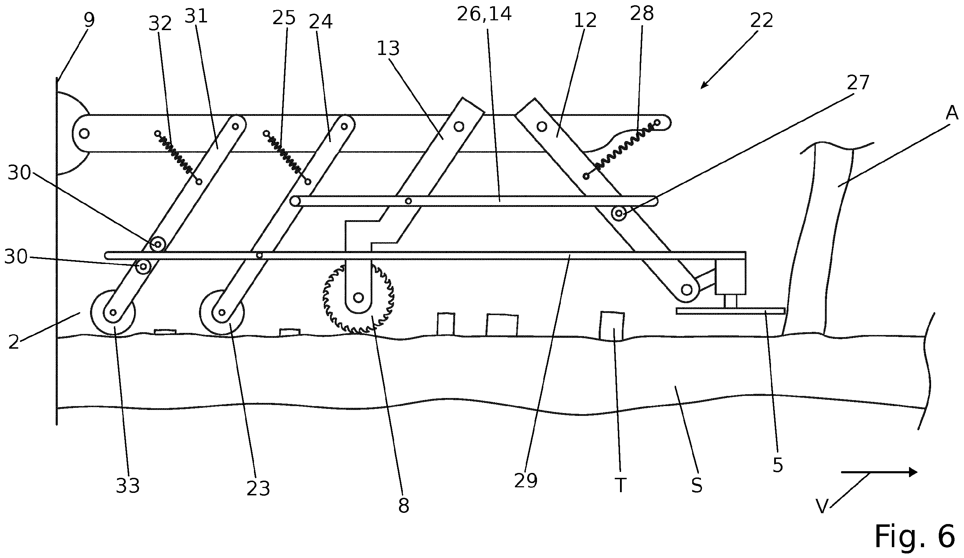

Weiters sind im Beispiel gemäß Fig. 1 die Sägekörper 5 und/oder die Fräskörper 8 zum Aufnahmeraum 2 hin und vom Aufnahmeraum 2 weg verstellbar angeordnet, siehe auch Fig. 6. Durch Verstellen der Sägekörper 5 und/oder der Fräskörper 8 vom Aufnahmeraum 2 weg kann ein Abschnitt des Baumstamms S einfach, ohne zu verklemmen, in den Aufnahmeraum 2 eingebracht werden. Zum Entfernen der Äste A werden die Sägekörper 5 und die Fräskörper 8 zum Aufnahmeraum 2 und daher zum Baumstamm S hin verstellt. Die Verstellbarkeit der Sägekörper 5 und/oder der Fräskörper 8 ermöglicht zudem die Einhaltung eines zweckmäßigen Abstands der Sägekörper 5 und/oder der Fräskörper 8 vom Baumstamm S während des Entfernens der Äste A. Die Anpassung dieses Abstands kann durch eine Steuereinheit 10 der Entastungsvorrichtung 1 erfolgen. Die Steuereinheit 10 kann hierfür mit einem Abstandsdetektor 11 verbunden sein, siehe Fig. 3, welcher einen Abstand der Sägekörper 5 und/oder der Fräskörper 8 zum Baumstamm S misst. In Fig. 3 ist der Übersichtlichkeit wegen nur ein einziger Abstandsdetektor 11 dargestellt. Selbstverständlich kann jedem Sägekörper 5 und jedem Fräskörper 8 ein Abstandsdetektor 11 zugeordnet sein. Im Beispiel gemäß Fig. 6 erfolgt die Anpassung des Abstands der Sägekörper 5 und der Fräskörper 8 vom Baumstamm S durch eine mechanische Steuervorrichtung 22 der Entastungsvorrichtung 1.

Für die Verstellung der Sägekörper 5 und der Fräskörper 8 ist im Beispiel gemäß Fig. 1 jeder Sägekörper 5 an einem schwenkbar gelagerten Säge-Haltearm 12 montiert und es ist jeder Fräskörper 8 an einem schwenkbar gelagerten Fräs-Haltearm 13 montiert, siehe auch Fig. 6. Insbesondere ist der Säge-Haltearm 12 schwenkbar mit dem Fräs-Haltearm 13 verbunden, wobei eine (nur symbolisch dargestellte) den Säge-Haltearm 12 und den Fräs-Haltearm 13 verbindende Säge-Haltearm-Verstelleinrichtung 14, insbesondere ein Motor 14a (Säge-Haltearm-Verstellmotor 14a), besonders bevorzugt ein Servomotor 14b (Säge-Haltearm-Verstellservomotor 14b), vorgesehen ist. Weiters ist erkennbar, dass der am Säge-Haltearm 12 montierte Sägekörper 5 schwenkbar am Säge-Haltearm 12 montiert ist und eine (nur symbolisch dargestellte) den Sägekörper 5 und den Säge-Haltearm 12 verbindende Sägekörper-Verstelleinrichtung 15, insbesondere ein Motor 15a (Sägekörper-Verstellmotor 15a), besonders bevorzugt ein Servomotor 15b (Sägekörper-Verstellservomotor 15b), vorgesehen ist. Zudem ist erkennbar, dass der Fräs-Haltearm 13 schwenkbar am Rahmen 9 montiert ist und eine (nur symbolisch dargestellte) den Fräs-Haltearm 13 und den Rahmen 9 verbindende Fräs-Haltearm-Verstelleinrichtung 16, insbesondere ein Motor 16a (Fräs-Haltearm-Verstellmotor 16a), besonders bevorzugt ein Servomotor 16b (Fräs-Haltearm-Verstellservomotor 16b), vorgesehen ist. In Fig. 3 ist zudem die dargestellte Steuereinheit 10 mit der Fräs-Haltearm-Verstelleinrichtung 16 verbunden, um abhängig von Messwerten des Abstandsdetektors 11 den Abstand des Fräskörpers 8 vom Baumstamm S an einen Soll-Abstand anzugleichen.

Fig. 6 zeigt symbolisch einen Teil der mechanischen Steuervorrichtung 22 zur Positionierung eines Sägekörpers 5 und eines Fräskörpers 8 in Bezug auf einen Baumstamm S, in einer vereinfachten Darstellung. Der Übersichtlichkeit wegen ist in Fig. 6 nur ein Sägekörper 5 und nur ein Fräskörper 8 dargestellt. Die mechanische Steuervorrichtung 22 weist ein erstes Tastrad 23 an einem ersten Tastarm 24 auf, welches/welcher über eine Druckfeder 25 gegen den Baumstamm S vorgespannt ist. Über eine Verbindungsstange 26, welche bspw. eine Säge-Haltearm-Verstelleinrichtung 14 ist, ist der erste Tastarm 24 gelenkig mit dem Fräs-Haltearm 13 verbunden und über eine Säge-Haltearm-Rolle 27 mit dem Säge-Haltearm 12 verbunden. Der Säge-Haltearm 12 ist über eine Zugfeder 28 vom Baumstamm S weg vorgespannt. Wenn sich der Baumstamm S in Vorschubrichtung V verjüngt, schwenkt der erste Tastarm 24 weiter in den Aufnahmeraum 2 hinein, wodurch sich die Verbindungsstange 26 zum Baumstamm S hin verschiebt und die Verbindungsstange 26 den Sägekörper 5 über die Säge-Haltearm-Rolle 27 zum Baumstamm S hin bewegt. Zudem verschwenkt die Verbindungsstange 26 den damit gelenkig verbundenen Fräs-Haltearm 13 und somit den Fräskörper 8 zum Baumstamm S hin. Um zusätzlich den Sägekörper 5 in eine Position parallel zur Oberfläche des Baumstamms S verkippen zu können, ist eine weitere Verbindungsstange 29 vorgesehen, welche den Sägekörper 5 über zwei Tastarm-Rollen 30 mit einem zweiten Tastarm 31 verbindet. Der zweite Tastarm 31 ist hinter dem ersten Tastarm 24 angeordnet, über eine Druckfeder 32 gegen den Baumstamm S vorgespannt und weist am Ende ein zweites Tastrad 33 auf. Wenn sich der Baumstamm S in Vorschubrichtung V verjüngt, schwenkt der erste Tastarm 24 stärker zum Baumstamm S als der zweite Tastarm 31, wodurch das mit dem Sägekörper 5 verbundene Ende der weiteren Verbindungsstange 29 zum Baumstamm S hin verschwenkt. Da der Sägekörper 5 gelenkig mit dem Säge-Haltearm 12 verbunden ist, schwenkt nun auch der Sägekörper 5 in eine Position iW. parallel zur Oberfläche des Baumstamms S.

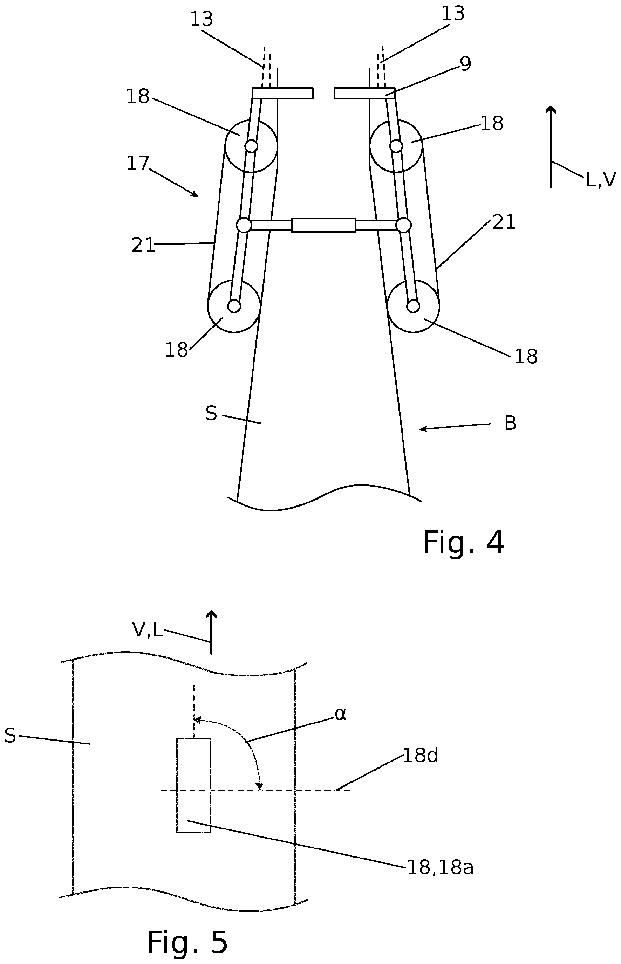

Die Figuren 1, 3 und 4 zeigen symbolisch eine mit der Sägevorrichtung 3 und der Fräsvorrichtung 6 verbundene, am Rahmen 9 montierte Klettereinrichtung 17 zur Anordnung am Baumstamm S. Die Klettereinrichtung 17 weist im Beispiel gemäß Fig. 3 und 4 zwei und im Beispiel gemäß Fig. 1 drei drehbar gelagerte Drehkörper 18, vorzugsweise ein Rad 18a oder eine Rolle 18b, mit einer in Umfangsrichtung kreisförmigen Lauffläche auf. Die Drehkörper 18 sind nur vereinfacht dargestellt. Die Klettereinrichtung 17 weist im dargestellten Beispiel zudem eine Kletter-Antriebseinheit 19 auf, welche mit zumindest einem der Drehkörper 18 verbunden ist. Im Beispiel gemäß Fig. 1 ist jedem Drehkörper 18 eine Kletter-Antriebseinheit 19 zugeordnet. Die Drehkörper 18 sind angeordnet, in einem am Baumstamm S angeordneten Zustand der Klettereinrichtung 17 den Baumstamm S zwischen den Drehkörpern 18 aufzunehmen und über die Laufflächen von zumindest zwei der Drehkörper 18 am Baumstamm S anzuliegen, siehe die Fig. 3 und 4. Die Drehachsen 18d der Drehkörper 18 sind in einem Winkel α von 90 Grad zur Vorschubrichtung V angeordnet, um die Entastungsvorrichtung 1 in Längsrichtung L des Baumstamms S vorantreiben zu können, siehe auch Fig. 5. In Fig. 5 ist ein Drehkörper 18 als Rad 18a dargestellt. Für eine zuverlässige Anlage am Baumstamm S ist zumindest ein Drehkörper 18 über ein Vorspannelement 20 gegen den Baumstamm S vorgespannt, siehe Fig. 3. Die Klettereinrichtung 17 weist im Beispiel gemäß Fig. 1 drei Rollen 18b und im Beispiel gemäß Fig. 3 zwei Rollen 18b mit einer nach innen zu einer Drehachse 18d der Rollen 18b gewölbten Lauffläche als Drehkörper 18 auf.

Fig. 4 zeigt eine Klettereinrichtung 17 einer Entastungsvorrichtung 1, welche vier Drehkörper 18 aufweist, von welchen jeweils zwei Drehkörper 18 übereinander angeordnet sind. Die übereinander angeordneten Drehkörper 18 sind von einer Kette oder Raupe 21 umgeben, sodass die Drehkörper 18 über die Kette oder Raupe 21 am Baumstamm S angreifen. Die Kette oder Raupe 21 vergrößert die Angriffsfläche und somit die Haftung der Klettereinrichtung 17 am Baumstamm S und erhöht somit die Sicherheit gegenüber einem Abrutschen der Entastungsvorrichtung 1 vom Baumstamm S. Zusätzlich zur höheren Haftung am Baumstamm S bewirkt die Kette oder Raupe 21 eine Druckverminderung der Klettereinrichtung 17 am Baumstamm S. In Fig. 4 symbolisieren vom Rahmen 9 nach oben führende strichlierte Linien eine Verbindung mit der in Fig. 4 nicht dargestellten, am Rahmen 9 montierten Sägevorrichtung 3 und Fräsvorrichtung 6.

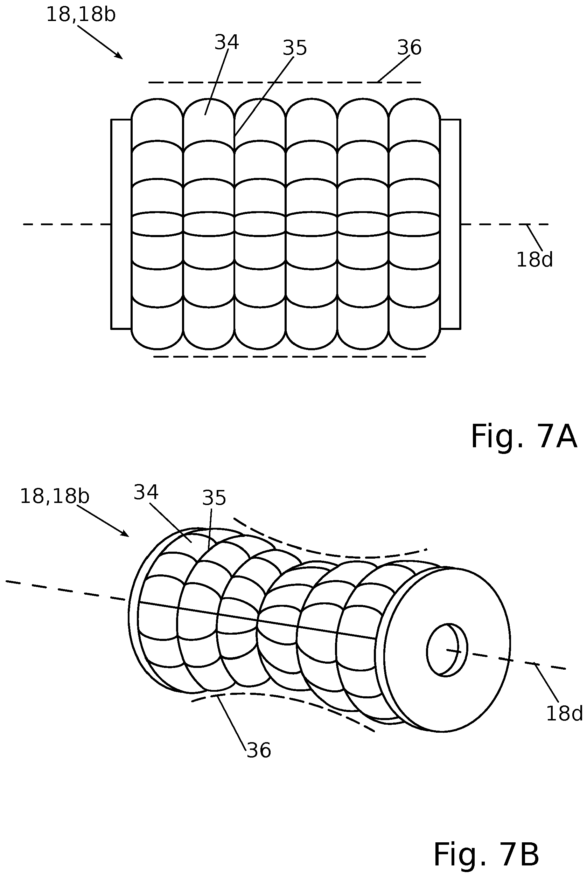

Fig. 7A zeigt ein weiteres Beispiel eines Drehkörpers 18 mit einer zylindrischen Einhüllenden 36 der Lauffläche. Der Drehkörper 18 ist zumindest teilweise aus Gummi gebildet. Insbesondere ist zumindest eine Mantelfläche des Drehkörpers 18 aus Gummi gebildet. Der Drehkörper 18 gemäß Fig. 7A ist als Rolle 18b ausgebildet, deren Mantelfläche mehrere in axialer Richtung der Rolle 18b verlaufende Erhöhungen 34 und Vertiefungen 35 und mehrere in radialer Richtung der Rolle 18b verlaufende Erhöhungen 34 und Vertiefungen 35 aufweist. Somit kann die Rolle 18b unterschiedliche Durchmesser aufweisen und insbesondere sowohl in axialer Richtung als auch in radialer Richtung eine wellige Oberfläche aufweisen.

Fig. 7B zeigt einen zum Drehkörper 18 aus Fig. 7A ähnlichen Drehkörper 18 mit in axialer Richtung und in radialer Richtung welliger Oberfläche, jedoch mit dem Unterschied, dass die Einhüllende 36 der Lauffläche nach innen zu einer Drehachse 18d der Rolle 18b gewölbt ist.

Die Drehkörper 18 gemäß Fig. 7A und 7B zeichnen sich durch besonders hohe Haftung am Baumstamm S aus.

Die mit der Klettereinrichtung 17 erzielte Vorschubgeschwindigkeit beträgt bevorzugt mehr als 10 cm pro Sekunde.

## Patentansprüche

1. Entastungsvorrichtung (1) zum Entasten eines Baumes (B) in einer Vorschubrichtung (V), mit einem für die Aufnahme eines Abschnitts eines Baumstamms (S) vorgesehenen Aufnahmeraum (2) und einer zur Anordnung um den Baumstamm (S) vorgesehenen Sägevorrichtung (3), welche mehrere drehbar gelagerte und mit zumindest einer Säge-Antriebseinheit (4) verbundene Sägekörper (5) aufweist, welche Sägekörper (5) um den Aufnahmeraum (2) herum angeordnet sind, **dadurch gekennzeichnet, dass** in Bezug auf die Vorschubrichtung (V) hinter der Sägevorrichtung (3) eine zur Anordnung um den Baumstamm (S) vorgesehene Fräsvorrichtung (6) vorgesehen ist, welche mehrere drehbar gelagerte und mit zumindest einer Fräs-Antriebseinheit (7) verbundene Fräskörper (8) aufweist, welche Fräskörper (8) um den Aufnahmeraum (2) herum angeordnet sind.

2. Entastungsvorrichtung (1) nach Anspruch 1, **dadurch gekennzeichnet, dass** die Sägevorrichtung (3) und die Fräsvorrichtung (6) an einem bevorzugt öffenbaren Rahmen (9) montiert sind, welcher insbesondere ausgebildet ist, zumindest die Hälfte des Umfangs des Baumstamms (S) zu umgreifen.

3. Entastungsvorrichtung (1) nach Anspruch 1 oder 2, **dadurch gekennzeichnet, dass** die Fräskörper (8) in Bezug auf die Sägekörper (5) in einer Umfangsrichtung des Aufnahmeraums (2) versetzt angeordnet sind und insbesondere die Fräskörper (8) in der Umfangsrichtung des Aufnahmeraums (2) mittig oder gleichmäßig verteilt zwischen benachbarten Sägekörpern (5) angeordnet sind.

4. Entastungsvorrichtung (1) nach einem der Ansprüche 1 bis 3, **dadurch gekennzeichnet, dass** zumindest zwei Sägekörper (5) in Vorschubrichtung (V) in Bezug aufeinander höhenversetzt angeordnet sind und/oder zumindest zwei Fräskörper (8) in Vorschubrichtung (V) in Bezug aufeinander höhenversetzt angeordnet sind.

5. Entastungsvorrichtung (1) nach Anspruch 4, **dadurch gekennzeichnet, dass** sich die in Bezug aufeinander höhenversetzten Sägekörper (5) in einer Ansicht in Vorschubrichtung (V) kreuzen, um eine durchgehende Schnittlinie zu bilden und/oder sich die in Bezug aufeinander höhenversetzten Fräskörper (8) in einer Ansicht in Vorschubrichtung (V) kreuzen, um eine durchgehende Fräsfläche zu bilden.

6. Entastungsvorrichtung (1) nach einem der Ansprüche 1 bis 5, **dadurch gekennzeichnet, dass** die Sägekörper (5) und/oder die Fräskörper (8) zum Aufnahmeraum (2) hin und vom Aufnahmeraum (2) weg verstellbar angeordnet sind.

7. Entastungsvorrichtung (1) nach einem der Ansprüche 1 bis 6, **dadurch gekennzeichnet, dass** zumindest ein Sägekörper (5) an einem schwenkbar gelagerten Säge-Haltearm (12) montiert ist und zumindest ein Fräskörper (8) an einem schwenkbar gelagerten Fräs-Haltearm (13) montiert ist.

8. Entastungsvorrichtung (1) nach Anspruch 7, **dadurch gekennzeichnet, dass** der Säge-Haltearm (12) schwenkbar mit dem Fräs-Haltearm (13) verbunden ist und vorzugsweise eine den Säge-Haltearm (12) und den Fräs-Haltearm (13) verbindende Säge-Haltearm-Verstelleinrichtung (14), insbesondere ein Motor (14a), besonders bevorzugt ein Servomotor (14b), vorgesehen ist.

9. Entastungsvorrichtung (1) nach Anspruch 7 oder 8, **dadurch gekennzeichnet, dass** der am Säge-Haltearm (12) montierte Sägekörper (5) schwenkbar am Säge-Haltearm (12) montiert ist und vorzugsweise eine den Sägekörper (5) und den Säge-Haltearm (12) verbindende Sägekörper-Verstelleinrichtung (15), insbesondere ein Motor (15a), besonders bevorzugt ein Servomotor (15b), vorgesehen ist.

10. Entastungsvorrichtung (1) nach Anspruch 2 und einem der Ansprüche 7 bis 9, **dadurch gekennzeichnet, dass** der Fräs-Haltearm (13) schwenkbar am Rahmen (9) montiert ist und vorzugsweise eine den Fräs-Haltearm (13) und den Rahmen (9) verbindende Fräs-Haltearm-Verstelleinrichtung (16), insbesondere ein Motor (16a), besonders bevorzugt ein Servomotor (16b), vorgesehen ist.

11. Entastungsvorrichtung (1) nach einem der Ansprüche 1 bis 10, **dadurch gekennzeichnet, dass** die Sägekörper (5) Kreissägenblätter (5a) oder Sägeketten (5b) sind.

12. Entastungsvorrichtung (1) nach einem der Ansprüche 1 bis 11, **dadurch gekennzeichnet, dass** die Fräskörper (8) Fräswalzen (8a), insbesondere mit einer nach innen zu einer Drehachse (8d) der Fräswalzen (8a) gewölbten Fräsfläche (8f) sind.

13. Entastungsvorrichtung (1) nach einem der Ansprüche 1 bis 12, **dadurch gekennzeichnet, dass** eine mit der Sägevorrichtung (3) und der Fräsvorrichtung (6) verbundene, insbesondere am Rahmen (9) montierte Klettereinrichtung (17) zur Anordnung am Baumstamm (S) vorgesehen ist.

14. Entastungsvorrichtung (1) nach Anspruch 13, **dadurch gekennzeichnet, dass** die Klettereinrichtung (17) zumindest zwei drehbar gelagerte Drehkörper (18), vorzugsweise ein Rad (18a) oder eine Rolle (18b), mit einer in Umfangsrichtung kreisförmigen Lauffläche und eine Kletter-Antriebseinheit (19) aufweist, welche mit zumindest einem der Drehkörper (18) verbunden ist, wobei die Drehkörper (18) angeordnet sind, in einem am Baumstamm (S) angeordneten Zustand der Klettereinrichtung (17) den Baumstamm (S) zwischen den Drehkörpern (18) aufzunehmen und über die Laufflächen von zumindest zwei der Drehkörper (18) am Baumstamm (S) anzuliegen, wobei Drehachsen (18d) der Drehkörper (18) in einem Winkel (α) von 90 Grad zur Vorschubrichtung (V) angeordnet sind, wobei vorzugsweise zumindest ein Drehkörper (18) über ein Vorspannelement (20) gegen den Baumstamm (S) vorgespannt ist.

15. Entastungsvorrichtung (1) nach Anspruch 14, **dadurch gekennzeichnet, dass** die Klettereinrichtung (17) zwei Rollen (18b) mit einer nach innen zu einer Drehachse (18d) der Rollen (18b) gewölbten Lauffläche als Drehkörper (18) aufweist.
